# FASCICULE DE BREVET EUROPEEN

(11) **EP 4 418 007 B1**
(45) Date de publication et mention de la délivrance du brevet: **01.04.2026**
(21) Numéro de dépôt: 24157968.9
(22) Date de dépôt: 15.02.2024
(51) Int. Cl.: G01S 7/52, F41G 3/26, F41G 9/00, G01S 15/74, G01S 15/88, F41J 9/04

(54) **MINIMISATION DU TEMPS DE LATENCE DE LA RÉPONSE D'UNE CIBLE À UNE ÉMISSION SONAR**
MINIMIERUNG DER LATENZ DER REAKTION EINES ZIELS AUF SONAREMISSION
MINIMIZING TARGET RESPONSE LATENCY TO SONAR TRANSMISSION

(30) Priorité: 16.02.2023 FR 2301456
(43) Date de publication de la demande: 21.08.2024
(73) Titulaire: RTSYS, 56850 Caudan (FR)
(72) Inventeur: ANTOINE, Samuel, 56100 Lorient (FR)
(74) Mandataire: Novagraaf Technologies

(56) Documents cités:
- CN-A- 101 634 708
- US-A- 3 641 485
- MURPHY STEFAN M ET AL: "Experimental Implementation of an Echo Repeater for Continuous Active Sonar", IEEE JOURNAL OF OCEANIC ENGINEERING, IEEE SERVICE CENTER, PISCATAWAY, NJ, US, vol. 42, no. 2, 1 April 2017 (2017-04-01), pages 289 - 297, XP011645600, ISSN: 0364-9059, [retrieved on 20170412], DOI: 10.1109/JOE.2016.2595380

## Description

### DOMAINE TECHNIQUE

La présente description est relative à une cible pour l'entraînement à la lutte anti-sous-marine.

Elle s'applique en particulier à la minimisation du temps de latence de la réponse d'une telle cible à une émission sonar.

### CONTEXTE

Une étape cruciale de la lutte anti-sous-marine consiste à détecter la présence et, si possible, la trajectoire, des navires sous-marins au moyen de sonar.

Une difficulté est que les sous-marins possèdent des signatures variables que les concepteurs cherchent à réduire afin de les rendre les moins détectables possible. Dès lors, le rapport signal à bruit d'un écho sonar peut être assez faible, du fait du bruit ambiant, y compris celui provoqué par le navire embarquant le sonar et en charge de la détection des sous-marins.

Afin d'améliorer les performances de cette lutte anti-sous-marine, le personnel doit être extrêmement bien formé à la manipulation des appareils de détection et acquérir une expérience substantielle. En outre, les dispositifs de détection eux-mêmes (sonar et logiciels de traitement numériques) doivent être constamment adaptés et améliorer afin de garantir des niveaux de performance requis.

Ces cibles sous-marines actuelles sont généralement des véhicules autonomes sous-marins qui peuvent être programmés ou pilotés à distance pour effectuer une mission et comportent des dispositifs permettant de simuler une réponse correspondant à un navire sous-marin classique à la réception d'un signal sonar. En effet, étant de taille substantiellement inférieure à celle d'un navire sous-marin conventionnel (pouvant embarquer du personnel), ils ne peuvent pas fournir une réponse passive suffisante pour leur détection, ou, en tout cas, leur réponse est très faible par rapport à un tel navire sous-marin.

Les cibles disposent donc de dispositifs permettant de simuler la réponse au moyen d'un émetteur acoustique.

Certaines cibles sont équipées d'un émetteur et d'un récepteur acoustiques positionnés sur la coque.

Si l'émetteur entre en fonctionnement lorsque la cible enregistre le signal acoustique, celui-ci est perturbé par la réémission. Aussi, selon l'état de l'art, l'émetteur et le récepteur ne fonctionnent pas simultanément : lorsqu'une émission sonar atteint la cible, elle enregistre l'intégralité de l'émission sonar. Lorsqu'elle détecte la fin de l'émission, elle réémet le signal enregistré de sorte à simuler un écho sonar tel qu'il aurait été obtenu avec un navire sous-marin de taille conventionnelle.

De telles cibles posent toutefois des problèmes, car elles présentent un temps de latence trop important entre l'émission d'un signal par le dispositif de détection et sa réception. En effet, comme la cible doit attendre la réception de l'ensemble du signal avant de pouvoir le réémettre, la réception du signal réémis par le détecteur est décalée d'autant dans le temps. En outre, la tendance des sonars récents est d'utiliser des signaux de plus en plus longs. Or, les détecteurs déterminent la distance d'une cible détectée en fonction du temps mis par le signal émis pour lui revenir. Dès lors, l'estimation de la distance de la cible sera faussée. Une telle cible ne permet donc pas un entrainement efficace du personnel en charge de la détection des véhicules sous-marins. MURPHY STEFAN M ET AL: "Experimental Implementation of an Echo Repeater for Continuous Active Sonar",IEEE JOURNAL OF OCEANIC ENGINEERING, IEEE SERVICE CENTER, PISCATAWAY, NJ, US, vol. 42, no. 2, 1 avril 2017 (2017-04-01), pages 289-297, XP011645600, propose une solution pour améliorer la latence. Ce document décrit une solution dans laquelle le navire (c'est-à-dire le détecteur) qui cherche à détecter la cible est équipé d'un sonar émettant sur plusieurs bandes : une bande principale sur laquelle il écoute l'écho pour la détection, et des bandes secondaires qui servent dans le cas du mode pingpong à transmettre un signal de synchronisation. Le signal de synchronisation est intégralement transmis avant le signal de la bande principale. C'est un signal horsbande qui sert à activer l'enregistrement puis la transmission des signaux acoustiques de la bande principale par la cible.

D'autres types de cibles disposent d'un émetteur sur la coque et d'une antenne tractée. Un tel agencement permet de simultanément analyser le signal reçu et émettre une réponse.

Lorsqu'un signal acoustique atteint la cible, elle enregistre, analyse puis répond en continue tout au long de la réception du signal entrant. Dès que la réponse est calculée pour une portion de signal, celle-ci est émise sans attendre la fin du signal acoustique complet.

Mais une telle solution ne résout que partiellement le problème de la latence : le temps de latence ne dépend plus de la durée du signal, mais du temps de calcul de la réponse.

Notamment, la minimisation du temps de latence qui fausse l'estimation de la distance entre la cible et le dispositif de détection, implique une contrainte forte sur la puissance de calcul à embarquer sur la cible et sur la précision des opérations de filtrage (taille des filtres FIR...).

En outre, l'ajout d'une antenne tractée est également une contrainte très importante :
- le déploiement et la récupération de la cible est plus complexe ;
- la traînée générée par l'antenne empêche d'atteindre de hautes vitesses et réduit fortement l'autonomie de la cible ;
- l'ajout d'une antenne représente un coût important.

Les cibles d'entraînement de l'état de la technique présentent donc différents inconvénients qui gênent leurs performances et leur utilisation effective.

### RESUME

Un objectif de la présente description est de fournir un dispositif pour cible sous-marine palliant au moins partiellement les inconvénients précités. En particulier, on vise à minimiser le temps de latence de la réponse d'une cible sous-marine d'entraînement à une émission acoustique, notamment sonar.

Plus particulièrement, selon des modes de réalisation, elle vise à fournir une cible permettant de réduire ce temps de latence par rapport aux cibles existantes, tout en conservant ou améliorant des caractéristiques de vitesse de la cible, de légèreté et de coût de fabrication.

À cette fin, selon un premier aspect, la présente description peut être mise en œuvre par un dispositif pour cible sous-marine comportant un récepteur acoustique, un émetteur acoustique et des moyens de traitement adaptés pour effectuer un premier cycle d'opérations comportant
- la détection au sein d'un flot acoustique capturé par ledit récepteur acoustique, du début d'un premier signal acoustique correspondant à des caractéristiques d'au moins un émetteur acoustique distant d'au moins un détecteur ;
- suite à la détection du début dudit premier signal, le déclenchement de l'enregistrement dudit premier signal ;
- la détection au sein dudit flot acoustique, de la fin dudit premier signal ;
- suite à la détection de la fin dudit premier signal, le déclenchement de l'arrêt dudit enregistrement ;
puis un second cycle d'opérations comportant :
- la détection au sein dudit flot acoustique, du début d'un second signal acoustique de même nature que le premier signal et correspondant auxdites caractéristiques; et suite à la détection du début dudit second signal, le déclenchement de l'émission, via ledit émetteur acoustique, du premier signal enregistré pendant le premier cycle d'opérations.

Suivant des modes de réalisation, le dispositif ou la méthode comprennent une ou plusieurs des caractéristiques suivantes qui peuvent être utilisées séparément ou en combinaison partielle entre elles ou en combinaison totale entre elles :
- ledit second cycle est itéré plusieurs fois, préférentiellement 5 fois ;
- lesdits moyens de traitement sont adaptés pour détecter des premiers et seconds signaux correspondant à des caractéristiques d'une pluralité de récepteurs acoustiques distants de détecteurs distincts ;
- lesdits moyens de traitement comportent un convertisseur analogique-numérique pour convertir ledit flot acoustique en une série d'échantillons numériques, des circuits numériques pour traiter ladite série, un convertisseur numérique-analogique pour convertir ladite série en un signal analogique et un amplificateur pour amplifier ledit signal analogique avant son émission via ledit émetteur acoustique ;
- lesdits circuits numériques sont adaptés pour transformer lesdits échantillons numériques dans le domaine fréquentiel et pour détecter un début de signal en fonction d'une comparaison d'une puissance pour chaque fréquence à au moins un seuil ;
- lesdits circuits numériques sont adaptés pour effectuer une première décimation de ladite série, par un premier facteur constant, puis, effectuer une seconde décimation de ladite série, par un facteur dépendant d'une largeur de bande correspondant auxdites caractéristiques dudit au moins un émetteur acoustique distant

Selon un second aspect, une cible sous-marine est décrite qui comporte un dispositif tel que précédemment défini.

Selon un autre aspect, un système est décrit qui comporte au moins une cible sous-marine tel que précédemment défini et au moins un détecteur.

Selon un autre aspect, un procédé est décrit destiné à être mis en œuvre par une cible sous-marine comportant un récepteur acoustique et un émetteur acoustique, ledit procédé comportant un premier cycle d'opérations comportant :
- la détection au sein d'un flot acoustique capturé par ledit récepteur acoustique, du début d'un premier signal acoustique correspondant à des caractéristiques d'au moins un émetteur acoustique distant d'au moins un détecteur ;
- suite à la détection dudébut dudit premier signal, le déclenchement de l'enregistrement dudit premier signal ;
- la détection au sein dudit flot acoustique, de la fin dudit premier signal ;
- suite à la détection de la fin dudit premier signal, le déclenchement de l'arrêt dudit enregistrement ;
puis un second cycle d'opérations comportant :
- la détection au sein dudit flot acoustique, du début d'un second signal acoustique de même nature que le premier signal correspondant auxdites caractéristiques; et suite à la détection du début dudit second signal, le déclenchement de l'émission, via ledit émetteur acoustique, du premier signal enregistré pendant le premier cycle d'opérations.

Selon un autre aspect, un programme d'ordinateur est également décrit qui comporte des instructions qui, une fois chargées sur une mémoire d'un processeur embarqué dans une cible sous-marine permettent la mise en œuvre d'un procédé tel que précédemment défini.

Le dispositif et la méthode décrits dans le présent document ne nécessite aucune programmation spécifique du détecteur puisqu'ils n'utilisent aucun signal spécifique ni aucune technologie de traitement du signal spécifique. Ainsi la solution est compatible avec l'utilisation de détecteurs standards, c'est-à-dire des mêmes détecteurs que ceux qui sont utilisés en opération. La solution décrite ici apporte une grande flexibilité d'usage.

D'autres caractéristiques et avantages apparaîtront à la lecture de la description qui suit d'un mode de réalisation, donné à titre d'exemple non limitatif et en référence aux dessins annexés

### BREVE DESCRIPTION DES FIGURES

Les dessins annexés illustrent un dispositif et une méthode tels que décrit dans le présent document :
- La figure 1 représente schématiquement un exemple de contexte dans lequel des modes de réalisation peuvent être mis en œuvre
- La figure 2 illustre une machine à états schématique selon un mode de réalisation.
- La figure 3 illustre un exemple de fonctionnement des moyens de traitement dans un mode de réalisation.
- La figure 4 illustre une architecture fonctionnelle possible pour les moyens de traitement dans un mode de réalisation.
- La figure 5 illustre une architecture fonctionnelle possible pour les circuits numériques dans un mode de réalisation.

### DESCRIPTION DETAILLEE DE MODES DE REALISATION

Une cible d'entraînement peut être un véhicule sous-marin autonome. Ces cibles peuvent être programmables et/ou pilotés à distance par un opérateur. La cible est prévue pour pouvoir capter des signaux acoustiques du type de ceux utilisés par les détecteurs de type sonars actifs, simuler une réponse correspondant à un véhicule sous-marin conventionnel et la transmettre en vue de sa capture par les détecteurs (sonars).

Il est à noter que typiquement une cible d'entrainement est de taille substantiellement plus réduite. En effet, celle-ci n'a pas besoin d'embarquer de personnel et doit être moins onéreuse en termes de coûts de fabrication et d'opération. Aussi, nativement, la réponse d'une telle cible est très différente de celle d'un véhicule sous-marin conventionnel et ne permet pas l'entrainement du personnel.

Le détecteur acoustique est typiquement un sonar (acronyme issu de l'anglais *« sound navigation and ranging »*). Il s'agit d'un appareil utilisant les propriétés particulières de la propagation du son dans l'eau pour détecter et situer les objets sous l'eau en indiquant leur direction et leur distance. En particulier, dans le cadre de la présente description, un sonar actif peut être utilisé, c'est-à-dire qui émet un signal acoustique et analyse ensuite la réponse, ou « écho », des éventuelles cibles dans le milieu aquatique.

L'analyse de ces réponses nécessitent à la fois des moyens techniques adaptés et des moyens humains entraînés au maniement de ces moyens techniques et à l'analyse des réponses telles que présentées par les moyens techniques.

Les cibles d'entrainement permettent ainsi d'entraîner ce personnel à la fois au maniement des outils de détection en conditions quasi-réelles, et à l'interprétation des résultats fournis par ces outils. L'enjeu est d'à la fois détecter l'ensemble des cibles sous-marines (minimisation des faux négatifs) et d'éviter les fausses détections (minimisation des faux positifs).

Un exemple de cibles d'entrainement peut être la cible SEMA MK-II de la société RTsys. Elle offre une simulation de la signature acoustique d'un sous-marin, répond aux sonars actifs, notamment aux sonars TBF1 de dernière génération et aux autodirecteurs de torpille. Elle peut descendre jusqu'à 300 mètres de profondeur et naviguer pendant environ 1heure et demi à 15 nœuds. Elle peut ainsi plonger l'équipage en entrainement dans un scénario opérationnel réaliste et le surprendre par des dérobements cinématiques.

Elle possède une longueur d'environ 2 mètres et un poids d'environ 33 kilogrammes, ce qui lui permet d'être assez aisément manipulée, déployée en mer et récupérée à partir de tout type d'embarcation (du zodiac à la frégate)

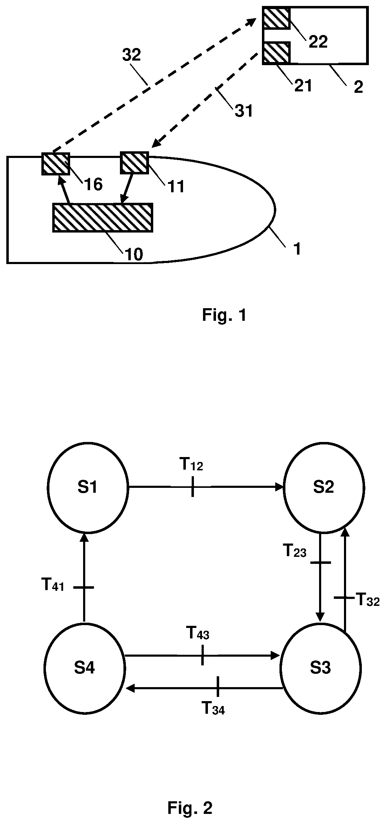

La figure 1 présente un contexte général dans lequel est susceptible d'être utilisé un dispositif ou une méthode tels que décrits dans le présent document.

Une cible sous-marine 1 est déployée et en fonctionnement. Des opérateurs (personnels militaires ou civils) utilisent un détecteur 2, telles qu'un sonar actif, afin de chercher à détecter la cible sous-marine 1.

Le détecteur 2 comporte un émetteur acoustique distant 21 adapté pour émettre un signal acoustique selon certaines caractéristiques. Ces caractéristiques comprennent notamment la caractérisation d'une bande de fréquences. L'émission peut également varier en puissance, en durée, etc.

D'une façon générale, un détecteur 2 émet un signal de façon répétée, afin de suivre le comportement (notamment le déplacement) des véhicules sous-marins, et de maximiser les taux de détection. Il arrive qu'en effet certains signaux ne fournissent pas d'échos suffisants pour la détection, et il est alors important d'avoir une redondance, en transmettant plusieurs signaux au fil du temps, afin de maximiser la probabilité d'obtenir un écho. L'analyse des différentes réponses obtenues au fil du temps permet en outre d'obtenir des informations complémentaires comme la direction ou la vitesse de déplacement.

La cible sous-marine comporte un récepteur acoustique 11 adapté pour capturer un flot acoustique 31.

Ce flot acoustique 31 peut comprendre le signal acoustique 30 émis par l'émetteur distant 21 avec une atténuation et des déformations liés à l'éloignement et aux vitesses relatives de la cible 1 et du détecteur 2. Si ceux-ci sont trop distants, le flot acoustique ne contiendra plus de signaux détectables de l'émetteur distant 21.

Selon certains modes de réalisation, plusieurs détecteurs peuvent être prévus, y compris plusieurs détecteurs (sonars) actifs. Auquel cas, le flot acoustique 31 capturé par le récepteur acoustique 11 peut comprendre différents signaux émis par ces détecteurs.

La cible 1 contient également des moyens de traitement 10 adaptés pour analyser le flot acoustique capturé par le récepteur acoustique 11, et, le cas échéant, déclencher l'émission d'une réponse acoustique 32 via un émetteur acoustique 16.

Cette réponse acoustique 32 est déterminée de sorte à former un écho similaire à ce qu'aurait fourni un véhicule sous-marin de façon passive (c'est-à-dire par simple réverbération du signal acoustique 31 sur la coque). Cette réponse émise 32 est donc de forme similaire (en fréquence et durée) au signal 31 capturé, mais les niveaux ne peuvent pas être comparés car ils ont des unités différentes (dBre1µPa² pour le niveau reçu et dBre1µPa²m² pour le niveau réémis.

Le niveau d'amplification en sortie peut dépendre notamment du type de sous-marin que l'on souhaite simuler.

En particulier, les moyens de traitement 10 sont adaptés pour détecter au sein du flot acoustique 31 reçu par le récepteur acoustique 11 le début d'un premier signal qui correspond à des caractéristiques d'un émetteur acoustique distant 21.

On entend ici par « correspondre à des caractéristiques d'un émetteur acoustique distant », le fait qu'on cherche à détecteur un signal particulier qui correspond à celui pouvant être émis par un émetteur acoustique, par exemple un sonar. Il s'agit donc de rechercher un tel signal à l'exclusion d'autres types de signaux pouvant être reçu par le récepteur 11 qui peuvent être d'origine naturelle ou artificielle (bruits du moteur de la cible, bruits liés au déplacement de la cible dans le milieu aquatique, etc.)

En outre, les caractéristiques de l'émetteur acoustique distant 21 peuvent comprendre la bande de fréquence utilisée par celui-ci, de sorte que les moyens de traitement 10 peuvent être adaptés pour chercher à détecter le début de signal dans cette bande de fréquences.

Dans le cas où plusieurs émetteurs acoustiques distants sont prévus, les moyens de traitement 10 peuvent être adaptés pour chercher à détecter les débuts de signaux dans les bandes de fréquences respectives.

La figure 2 illustre une machine à états schématique qui, selon un mode de réalisation, peut représenter le fonctionnement des moyens de traitement 10.

L'état S1 correspond à cet état de détection d'un début de signal dans un flot acoustique capturé.

Lorsqu'un début de signal est détecté, la transition T₁₂ est déclenchée et les moyens de traitement 10 passent dans un état S2.

Dans cet état S2, l'enregistrement du signal détecté est enclenché. Le signal est enregistré dans une mémoire embarquée dans la cible sous-marine 1.

Dans ce même état S2, les moyens de traitement 10 cherchent à détecter la fin de ce signal au sein du flot acoustique 31.

La détection de la fin de ce signal déclenche la transition T₂₃ faisant passer les moyens de détection dans un état S3.

Les états S1 et S2 forment un premier cycle d'opérations qui visent à capturer le signal d'un détecteur et à l'enregistrer. Durant ce cycle, la cible n'émet pas de réponse.

Les états S3 et S4 forment un second cycle d'opérations qui visent à émettre une réponse vers le détecteur distant. Durant ce cycle, la cible n'analyse plus le flot acoustique qui parvient au récepteur 11.

Dans l'état S3, les moyens de traitement 10 cherchent à détecter, au sein du flot acoustique 31, le début d'un second signal correspondant aux caractéristiques d'un émetteur acoustique distant.

Cette étape est similaire à celle de l'état S1, et les moyens de détection cherchent essentiellement à détecter un signal de même nature. Les termes « premier » et « second » visent uniquement à les distinguer dans l'exposé qui suit, et sont relatifs uniquement à l'utilisation qui est faite de leur détection par les moyens de traitement.

La transition T₃₄ correspond à la détection d'un début de (second) signal correspondant aux caractéristiques d'un émetteur acoustique distant. Ces caractéristiques correspondent à celles du premier signal et sont telles que précédemment décrites.

Ce début de signal détecté (entrainant la validation de cette transition T₃₄), les moyens de traitement passent dans un état S4.

Selon un mode de réalisation, les moyens de traitement peuvent détecter un signal différent du signal déjà enregistré. Auquel cas les moyens de traitement repassent dans l'état S2 (validation de la transition T₃₂) et enregistrent le nouveau signal à la place de l'ancien puis attendent, dans l'état S3, la répétition de ce signal

Dans l'état S4, les moyens de traitement peuvent ne plus analyser le flot acoustique 31 reçu et déclenchent l'émission du premier signal mémorisé lors du premier cycle d'opération, et, plus précisément dans l'état S2 des moyens de traitement.

Pour ce faire, les moyens de traitement 10 transmettent le signal mémorisé à l'émetteur acoustique 16 qui transmet un flot acoustique 32 dans le milieu aquatique. Ce signal correspond à un écho simulé du signal émis par l'émetteur acoustique distant 21 du détecteur 2. Le détecteur comporte également un récepteur 22 adapté pour recevoir les flots acoustiques et l'analyser pour y détecter un tel signal 32. Ainsi, le détecteur 2 peut détecter la présence d'un véhicule sous-marin simulé par la cible sous-marine.

Ce second cycle d'opération peut être réitéré un nombre prédéfini de fois.

Dans un cas limite, il n'est itéré qu'une unique fois, c'est-à-dire qu'à la suite d'une réémission d'un signal mémorisé, les moyens de traitement valident la transition T₄₁ et passent dans l'état S1 correspondant au premier cycle d'opération. Dans un tel cas, la cible mémorise un signal sur deux et émet un signal mémorisé chaque deux détections de signaux.

Dans un cas préférentiel, le second cycle réitéré 5 fois, avant qu'un nouveau premier cycle d'opérations soit déclenché à nouveau.

Selon un mode de réalisation, dans l'état S4, les moyens de détection 10 incrémentent un compteur. Lorsque le signal mémorisé est transmis, ce compteur est testé. S'il est inférieur à un nombre prédéfini (par exemple 5), la transition T₄₃ est validée et les moyens de traitement repassent dans l'état S3 pour attendre un nouveau début de second signal. Si le nombre prédéfini est atteint, alors la transition T₄₁ est validée et les moyens de traitement repassent dans l'état S1 pour attendre le début d'un premier signal (pour sa mémorisation).

Le déclenchement périodique du premier cycle d'opérations permet de rafraichir le signal reçu du détecteur 2, car celui-ci pouvant évoluer dans le temps, il est important de conserver l'adéquation de l'écho simulé à celui-ci. *A contrario,* un trop grand nombre de rafraîchissement de ce signal engendrerait mécaniquement un plus petit nombre de transmission d'échos simulés et nuirait à la détection de cet écho par le détecteur 2. Le nombre de 5 réémissions du signal mémorisé avant rafraîchissement par nouvelle mémorisation représente un compromis optimal déterminé par l'expérimentation.

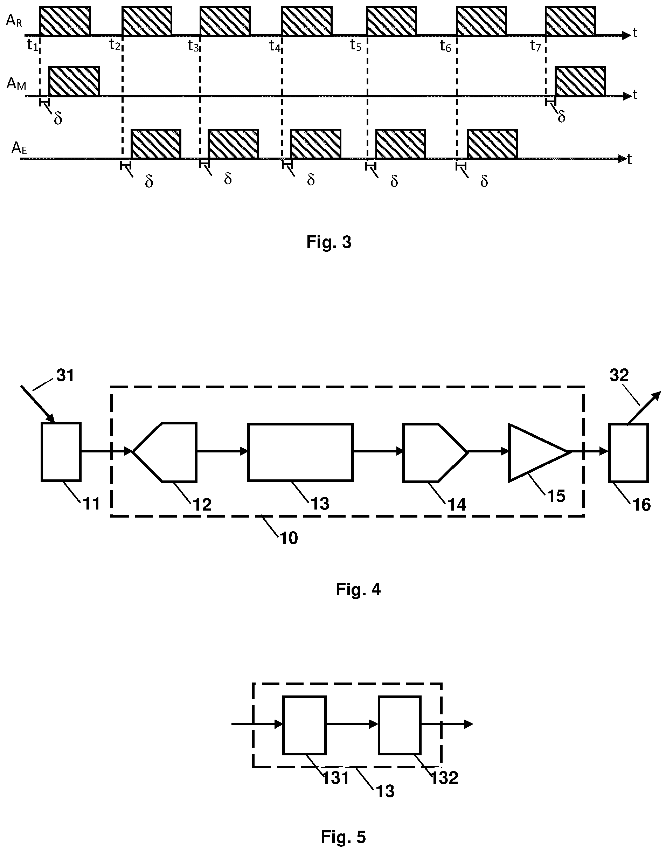

La figure 3 illustre un exemple de fonctionnement des moyens de traitement 10 en se focalisant sur une activité de réception, A_{R}, une activité de mémorisation, A_{M}, et une activité d'émission A_{E}. La figure 3 illustre trois chronogrammes correspondant à ces activités se déroulant en parallèle, les axes horizontaux représentant le temps t.

L'activité de réception A_{R} représente le flot acoustique entrant, c'est-à-dire capturé par le récepteur 11 et fournit aux moyens de traitement 10 pour analyse. L'activité de mémorisation A_{M} représente la mémorisation d'un (premier) signal détecté par les moyens d'acquisition (dans l'étape S2 dans l'exemple de la figure 2). L'activité d'émission A_{E} représente l'émission d'un signal mémorisé vers l'émetteur acoustique 16 (dans l'étape S4 dans l'exemple de la figure 2).

On suppose qu'initialement les moyens de traitement n'ont pas encore détecté de signaux acoustiques et sont donc dans un état correspondant à l'état S1 de l'exemple de la figure 2.

A l'instant t₁, un signal commence à être reçu. Les moyens de traitement 10 analysent le flot acoustique entrant et détectent le début de ce signal et déclenche sa mémorisation à l'instant t₁+δ. La durée δ correspond au temps nécessaire pour les moyens de traitement pour analyser le flot acoustique entrant et y détecter le début du signal.

Les moyens de traitement analysent le flot entrant pour détecter la fin du signal et interrompre la mémorisation.

À ce moment-là, le premier cycle d'opérations se termine et le second cycle d'opérations commence.

A l'instant t₂, un nouveau signal est reçu. A l'instant t₂+δ (on suppose que le temps de latence δ est constant, pour la clarté de l'exposé), les moyens de traitement 10 commencent à émettre le signal mémorisé via l'émetteur acoustique 16.

Dans cet exemple, le second cycle d'opérations est itéré 5 fois.

De la même façon, aux instant t₃, t₄, t₅, t₆, de nouveaux signaux sont reçus. Aux instants t₃+δ, t₄+δ, t₅+δ, t₆+δ, les moyens de traitement 10 commencent à émettre le signal mémorisé via l'émetteur acoustique 16.

A l'instant t₇, un nouveau signal est reçu. Mais le nombre d'itérations prévu pour le second cycle d'opérations étant atteint, un nouveau premier cycle d'opérations commence.

Les moyens de traitement 10 analysent le flot acoustique entrant et détectent le début de ce signal et déclenche sa mémorisation à l'instant t₇+δ.

Le processus peut continuer avec un nouveau second cycle d'opérations qui peut être itéré 5 fois à nouveau et ainsi de suite.

On alterne donc des premiers cycles durant lesquels la cible capture les flots acoustiques et n'émet elle-même aucun signal acoustique, et des seconds cycles durant lesquels, au contraire, elle émet une réponse acoustique (simulant un écho d'un signal précédemment détecté au sein des flots acoustiques) mais n'analyse pas les flots acoustiques, ni ne mémorise les signaux reçus.

Ainsi, dans l'exemple illustré par la figure 3, on remarque que sur 6 signaux émis par le détecteur 2 et reçus par la cible 1, cinq réponses sont émises par celle-ci et susceptibles d'être captés par le détecteur 2.

Ce principe de ne pas chercher à analyser l'ensemble des flots acoustiques reçus, et de transmettre un écho simulé d'un signal précédemment reçu lors de la réception d'un nouveau signal permet d'améliorer sensiblement les performances par rapport aux solutions de l'état de la technique.

Par l'expérimentation, les inventeurs ont déterminé que le fait de ne pas répondre à l'ensemble des signaux reçus (ceux correspondant au premier cycle) n'engendre pas d'inconvénients majeurs. En effet, en conditions réelles, les conditions de propagation dans le milieu aquatique sont telles que, de toutes les manières, une part importante des échos sonars ne sont pas reçus ou détectés par les sonars.

La figure 4 illustre une architecture fonctionnelle possible pour les moyens de traitement 10.

Selon ce mode de réalisation, les moyens de traitements 10 comportent un convertisseur analogique-numérique 12 pour convertir le flot acoustique provenant du récepteur acoustique 11 en une série d'échantillons numériques, des circuits numériques 13 pour traiter cette série, et un convertisseur numérique-analogique 14 pour convertir cette série en un signal analogique pour émission via l'émetteur acoustique 16. Les moyens de traitement 10 peuvent en outre comprendre un amplificateur 15 pour amplifier le signal analogique avant son émission via l'émetteur 16.

Selon un mode de réalisation, ces moyens de traitement 10 peuvent être mis en œuvre par une carte électronique adaptée pour être embarquée dans la cible sous-marine d'entrainement. Celle-ci comporte donc un caisson étanche au sein duquel cette carte peut être embarquée.

Cette carte électronique peut remplir les fonctions suivantes :
- assurer la conversion analogique-numérique du signal capté par le récepteur acoustique ;
- fournir les ressources de calcul et de mémoire nécessaires pour l'algorithme de traitement, tel que par exemple exposé ci-dessus en références aux figures 2 et 3 ;
- réaliser la conversion numérique-analogique de la réponse.

Le signal peut ensuite être transmis à l'amplificateur de tension 15 pour l'émetteur acoustique 16.

Selon un mode de réalisation, la carte électronique peut comporter un convertisseur analogique-numérique fonctionnant à 10 MHz. Les données sont ensuite traitées par les circuits numériques 13.

Selon un mode de réalisation, les circuits numériques peuvent comprendre un processeur associé à une mémoire mémorisant des instructions logicielles permettant de mettre en œuvre l'algorithme de traitement du signal qui va être décrit.

Selon un mode de réalisation, ainsi qu'illustré par la figure 5, les circuits numériques 13 peuvent comporter un circuit logique programmable 131, ou plus spécifiquement un réseau de portes programmables in-situ ou FPGA (pour « *Field-programmable Gate Area »* en anglais), et un processeur de traitement du signal numérique 132, ou DSP (pour « *Digital Signal Processor »* en anglais). Le processeur DSP peut être en charge de la mise en œuvre de l'algorithme exposé ci-dessus, et qui calcule la réponse de la cible.

Le circuit logique programmable peut être en charge, selon un mode de réalisation, d'une étape préalable de décimation associée à un filtrage anti-repliement de spectre. Cette décimation peut être effectuée d'un facteur constant et prédéterminé. Par exemple, un facteur de 128 peut être utilisé.

Selon un mode de réalisation, les données sont transmises du circuit logique programmable 131 vers le processeur de traitement du signal numérique 132 par blocs de taille constante. Cette taille peut par exemple être de 128 échantillons.

La réception d'un bloc déclenche un nouveau cycle d'analyse par le processeur de traitement du signal numérique 132. À chaque cycle d'analyse, le processeur 132 détermine la présence ou l'absence de signal sonar. Une contrainte forte est que cette analyse doit être réalisée avant qu'un nouveau bloc soit reçu afin de garantir une analyse en temps-réel du flot acoustique 31 et minimiser le temps de latence δ.

La réponse calculée par les circuits numériques 13 peut ensuite être transformée par le convertisseur numérique-analogique.

Selon un mode préférentiel de réalisation, cette carte électronique est dédiée à l'algorithme de traitement qui n'est donc pas interrompu par des processus concurrents.

De plus, le processeur DSP 132 dispose de fonctions de traitement du signal implémentées de manière optimisée et peut donc garantir qu'un bloc de données est traité avant que le bloc suivant ne soit enregistré (temps réel). Selon un mode de réalisation, un bloc de données est constitué de 128 échantillons et correspond donc à 1.7 ms.

L'algorithme remplit principalement deux fonctions :
- détecter le début et la fin d'un signal au sein d'un flot acoustique, et permettre ainsi, notamment, son enregistrement ; et,
- gérer la logique de réponse, c'est-à-dire ordonnancer les cycles d'enregistrement d'un signal détecté et d'émissions d'un signal enregistré.

En particulier, selon un mode de réalisation, une première étape consiste à isoler la bande de fréquence dans laquelle est située le signal à détecter.

En effet, la cible (ou plus précisément les moyens de traitement de la cible) peut être configurée en fonction du dispositif de détection 2 utilisé pour sa détection. Ainsi, la cible peut s'adapter au matériel et aux conditions mis en place pour l'entrainement du personnel. En effet, chaque dispositif de détection peut travailler sur une fréquence propre au dispositif pour l'émission des signaux acoustiques et, afin de simuler au mieux une réponse adéquate, la cible peut avoir à connaitre cette fréquence qui lui est propre, ainsi que d'éventuels autres paramètres caractérisant le signal.

Selon un mode de réalisation, la cible peut traiter simultanément plusieurs signaux de détecteurs 2 avec des bandes de fréquences non superposées.

En effet, afin d'optimiser la détection des véhicules sous-marins, il est intéressant de déployer plusieurs détecteurs. Par exemple, dans le cas d'une flotte de navires, chaque peut disposer d'un détecteur sonar.

Dans de telles situations, la cible peut fournir des échos simulés pour chacun des détecteurs sonars en fonctionnement.

L'utilisateur de la cible d'entrainement peut configurer les bandes de fréquences correspondant à ces différentes détecteurs sonars. En particulier, un nombre de détecteurs, Nᵥₒᵢₑₛ, peut être défini, de même que pour chaque bande de fréquences, ou voie, correspondant à un détecteur, une fréquence centrale f_{c} et une largeur de bande bw.

Les moyens de traitement (et en particulier le processeur 132 selon un mode de réalisation) sont adaptés pour détecter des premiers et seconds signaux correspondant à des caractéristiques d'une pluralité de récepteurs acoustiques distants 21 de détecteurs distincts 2. Ils sont adaptés pour réaliser ces analyses pour chaque voie dans le temps imposé par la réception au fil de l'eau des blocs de données transmis par le circuit logique programmable 131.

Le flot de données reçu est analysé pour isoler les données pouvant correspondre à des signaux correspondant aux caractéristiques du ou des émetteurs acoustiques distants. Concrètement, selon un mode de réalisation, il s'agit de détecter le début (puis la fin) d'un signal de type sonar, au sein du flot de données reçu.

Selon un mode de réalisation, une analyse fréquentielle peut être effectuée puisque la fréquence centrale et la largeur de bande sont connus pour chaque émetteur acoustique distant.

Ainsi, par exemple, dès qu'un bloc d'échantillons est reçu, pour chaque voie (c'est-à-dire émetteur acoustique distant), les échantillons sont modulés par un signal sinusoïdal complexe de fréquence -fc afin de centrer la bande de fréquence utile sur zéro. On obtient ainsi Nᵥₒᵢₑₛ signaux modulés qui peuvent ensuite être traités en parallèle.

Par exemple de traitement 'un flot acoustique peut contenir des signaux provenant de 3 émetteurs acoustiques distincts. Un premier émetteur acoustique émet des signaux sonars dans une bande de fréquence centrale fc1 et de largeur bw1, un deuxième émetteur acoustique émet des signaux sonars dans une bande de fréquence centrale fc2 et de largeur bw2 et le troisième émetteur acoustique émet des signaux sonar dans une bande de fréquence centrale fc3 et de largeur bw3.

Les signaux modulés correspondant à chaque bande de fréquence sont ensuite décimés et filtrés par un filtre polyphase.

La décimation consiste à sous-échantillonner les échantillons entrant pour n'en garder qu'une partie. Un filtre polyphase est un filtre mis en place à la suite d'une décimation. Il vise notamment à éviter le repliement de spectre lié à la décimation et est mis en place après la décimation afin de réduire les calculs et améliorer l'efficacité.

Les filtres polyphases sont bien connus de l'homme du métier et expliqué dans la littérature. On peut par exemple se référer à la page Wikipédia suivante : https://en.wikipedia.org/wiki/Polyphase_quadrature_filter

Il s'agit typiquement d'un filtre à réponse impulsionnelle finie passe-bas. Les filtres à réponse impulsionnelle finie, ou filtres FIR (pour « *Finite Impulse Response »* en anglais) sont des filtres dont la réponse impulsionnelle est de durée finie. Un filtre numérique RIF est caractérisé par une réponse uniquement basée sur un nombre fini de valeurs du signal d'entrée. Par conséquent, quel que soit le filtre, sa réponse impulsionnelle sera stable et de durée finie, dépendante du nombre de coefficients du filtre. Les termes de « filtre non récursif » ou de « filtre à moyenne mobile » sont parfois employés pour nommer la même classe de filtres, bien que l'expression de filtre à moyenne mobile désigne en premier lieu les filtres passe-bas.

Le facteur de décimation dépend de la largeur de bande. On comprend en effet que plus la bande est large et moins on peut décimer du fait du filtre passe-bas anti-repliement. Ainsi, plus la bande est large et plus le facteur de décimation est faible.

Un des intérêts de cette décimation est de pouvoir diminuer le volume de données à manipuler dans les étapes subséquentes et à mémoriser. En effet, comme tout système embarqué, le dimensionnement de la mémoire est une contrainte forte pour la cible sous-marine. Aussi, afin de mémoriser le signal à émettre en écho par la cible, il importe que celui-ci occupe le moins d'espèce possible. Ceci est d'autant plus important lorsque plusieurs voies doivent être gérées, correspondantes à autant de détecteurs distants 2. Le facteur de décimation est donc un compromis entre le requis d'économie de la mémoire et le requis de ne pas perdre l'information fréquentielle des signaux traités, surtout pour des larges bandes de fréquences.

Les flots acoustiques reçus par le récepteur acoustique 11 comportent des composantes de bruits et (éventuellement) des signaux émis par les émetteurs distants 21.

À chaque nouveau bloc de données reçu, pour chaque bande de fréquence, les flots acoustiques ainsi modulés et filtrés sont analysés sur une certaine durée. L'analyse porte sur les échantillons enregistrés les plus récents. L'algorithme calcule la puissance moyenne du signal, et compare cette puissance à un seuil de détection.

Si dans une bande de fréquence, la puissance moyenne du signal sur la durée d'analyse est supérieure au seuil de détection, l'algorithme traite le signal issu de cette bande de fréquence comme venant d'un émetteur acoustique distant :
- soit les moyens de traitement sont dans un premier cycle d'opérations, et le signal a été mémorisé dans une mémoire associée aux moyens de traitement 10 ;
- soit les moyens de traitement sont dans un second cycle d'opérations et le signal mémorisé précédemment doit être émis.

Du fait de la décimation précédemment expliquée, un signal mémorisé occupe un volume de données réduit correspondant aux contraintes des systèmes embarqués.

Le seuil de détection est choisi suffisamment élevé pour que les composantes de bruit ne génèrent pas de fausses détections afin que seuls les signaux émis par les émetteurs distants 21 génèrent des détections.

L'émission peut comprendre des traitements symétriques à ceux ayant été appliqués entre la réception du flot acoustique et sa mémorisation dans la mémoire embarquée.

En particulier, selon des modes de réalisation, le signal peut être interpolé afin de restituer l'échantillonnage initial avant décimation.

Chacune des voies peut être modulée par un signal sinusoïdal complexe de la fréquence centrale f_{c} respective, avec un filtre polyphase, afin de reconstituer le signal originel.

Le signal peut ensuite être transmis au convertisseur numérique-analogique 14, puis, éventuellement, à un amplificateur 15 afin lui donner l'amplitude correspondant à un écho réaliste et pouvant être perçu par le récepteur acoustique distant 22.

Le signal peut alors être émis par un émetteur acoustique 16. Ce signal acoustique se propage, de façon classique, dans le milieu aquatique et peut être reçu par un récepteur acoustique distant 22, appartenant à détecteur 2. Le détecteur peut ainsi détecter la présence de la cible d'entrainement et l'interpréter comme un véhicule sous-marin.

La solution décrite ici permet un faible temps de latence, de sorte que le temps entre l'émission d'un signal par l'émetteur acoustique distant 21 et la réception de son écho simulé par le récepteur acoustique distant 22 forme une très bonne approximation du temps qu'aurait effectivement mis la transmission du signal et son écho d'un véritable véhicule sous-marin. Il en résulte qu'on peut déduire de ce temps une bonne estimation de la distance entre la cible sous-marine 1 et le détecteur 2. Cette bonne estimation permet aux utilisateurs du détecteur 2 de bien tracer la position et les déplacements de la cible d'entrainement simulant un véhicule sous-marin.

Bien entendu, l'invention n'est pas limitée aux exemples et au mode de réalisation décrits et représentés, mais est définie par les revendications. Elle est notamment susceptible de nombreuses variantes accessibles à l'homme de l'art.

## Revendications

1. Dispositif pour cible sous-marine (1) comportant un récepteur acoustique (11), un émetteur acoustique (16) et des moyens de traitement (10) adaptés pour effectuer un premier cycle d'opérations comportant
- la détection au sein d'un flot acoustique (31) capturé par ledit récepteur acoustique, du début d'un premier signal acoustique correspondant à des caractéristiques d'au moins un émetteur acoustique distant (21) d'au moins un détecteur (2) ;
- suite à la détection du début dudit premier signal, le déclenchement de l'enregistrement dudit premier signal ;
- la détection au sein dudit flot acoustique de la fin dudit premier signal ;
- suite à la détection de la fin dudit premier signal, le déclenchement de l'arrêt dudit enregistrement ;
puis un second cycle d'opérations comportant :
- la détection au sein dudit flot acoustique, du début d'un second signal acoustique de même nature que le premier signal et correspondant auxdites caractéristiques; et suite à la détection du début dudit second signal, le déclenchement de l'émission via ledit émetteur acoustique (16) du premier signal enregistré pendant le premier cycle d'opérations.

2. Dispositif selon la revendication précédente, dans lequel ledit second cycle est itéré plusieurs fois, préférentiellement 5 fois.

3. Dispositif selon l'une des revendications précédentes, dans lequel lesdits moyens de traitement sont adaptés pour détecter des premiers et seconds signaux correspondant à des caractéristiques d'une pluralité de récepteurs acoustiques distants (21) de détecteurs distincts.

4. Dispositif selon l'une des revendications précédentes, dans lequel lesdits moyens de traitement comportent un convertisseur analogique-numérique (12) pour convertir ledit flot acoustique en une série d'échantillons numériques, des circuits numériques (13) pour traiter ladite série, un convertisseur numérique-analogique (14) pour convertir ladite série en un signal analogique et un amplificateur (15) pour amplifier ledit signal analogique avant son émission via ledit émetteur acoustique (16).

5. Dispositif selon la revendication précédente, dans lequel lesdits circuits numériques sont adaptés pour transformer lesdits échantillons numériques dans le domaine fréquentiel et pour détecter un début de signal en fonction d'une comparaison d'une puissance pour chaque fréquence à au moins un seuil.

6. Dispositif selon l'une des revendications 3 à 5, dans lequel lesdits circuits numériques sont adaptés pour :
- effectuer une première décimation de ladite série, par un premier facteur constant,
- puis, effectuer une seconde décimation de ladite série, par un facteur dépendant d'une largeur de bande correspondant auxdites caractéristiques dudit au moins un émetteur acoustique distant (21)

7. Cible sous-marine comportant un dispositif selon l'une des revendications précédentes.

8. Système comportant au moins une cible sous-marine selon la revendication précédente et au moins un détecteur (2).

9. Procédé mis en œuvre par une cible sous-marine (1) comportant un récepteur acoustique (11) et un émetteur acoustique (16), ledit procédé comportant un premier cycle d'opérations comportant
- la détection au sein d'un flot acoustique (31) capturé par ledit récepteur acoustique, du début d'un premier signal acoustique correspondant à des caractéristiques d'au moins un émetteur acoustique distant (21) d'au moins un détecteur (2) ;
- suite à la détection du début dudit premier signal, le déclenchement de l'enregistrement dudit premier signal ;
- la détection au sein dudit flot acoustique de la fin dudit premier signal ;
- suite à la détection de la fin dudit premier signal, le déclenchement de l'arrêt dudit enregistrement ;
puis un second cycle d'opérations comportant :
- la détection au sein dudit flot acoustique, du début d'un second signal acoustique de même nature que le premier signal correspondant auxdites caractéristiques; et suite à la détection du début dudit second signal, le déclenchement de l'émission via ledit émetteur acoustique (16) du premier signal enregistré pendant le premier cycle d'opérations.

10. Programme d'ordinateur comportant des instructions qui, une fois chargées sur une mémoire d'un processeur embarqué dans une cible sous-marine comportant un dispositif selon la revendication 1, permettent la mise en œuvre d'un procédé selon la revendication précédente.

## Patentansprüche

1. Unterwasserzielvorrichtung (1) mit einem akustischen Empfänger (11), einem akustischen Sender (16) und Verarbeitungsmitteln (10), die ausgelegt sind, einen ersten Betriebszyklus auszuführen, aufweisend
- das Detektieren innerhalb eines vom akustischen Empfänger erfassten akustischen Stroms (31) des Beginns eines ersten akustischen Signals, entsprechend den Merkmalen mindestens eines entfernten akustischen Senders (21) mindestens eines Detektors (2);
- das Auslösen des Aufzeichnens des ersten Signals nach dem Detektieren des Beginns des ersten Signals;
- das Detektieren des Endes des ersten Signals innerhalb des akustischen Stroms;
- das Auslösen des Anhaltens des Aufzeichnens nach dem Detektieren des Endes des ersten Signals;
anschließend einen zweiten Betriebszyklus, aufweisend:
- das Detektieren innerhalb des akustischen Stroms des Beginns eines zweiten akustischen Signals derselben Art wie das erste Signal und entsprechend den genannten Merkmalen; und nach dem Detektieren des Beginns des zweiten Signals, das Auslösen des Übertragens des ersten Signals, das während des ersten Betriebszyklus aufgezeichnet wurde, über den akustischen Sender (16).

2. Vorrichtung nach dem vorstehenden Anspruch, wobei der zweite Zyklus mehrmals, vorzugsweise 5 Mal, wiederholt wird.

3. Vorrichtung nach einem der vorstehenden Ansprüche, wobei die Verarbeitungsmittel ausgelegt sind, um erste und zweite Signale zu detektieren, entsprechend den Merkmalen einer Vielzahl von entfernten akustischen Empfängern (21) separater Detektoren.

4. Vorrichtung nach einem der vorstehenden Ansprüche, wobei die Verarbeitungsmittel einen Analog-Digital-Wandler (12) zum Umwandeln des akustischen Stroms in eine Serie digitaler Abtastwerte, digitale Schaltungen (13) zum Verarbeiten der Serie, einen Digital-Analog-Wandler (14) zum Umwandeln der Serie in ein analoges Signal und einen Verstärker (15) zum Verstärken des analogen Signals vor dessen Übertragung über den akustischen Sender (16) aufweisen.

5. Vorrichtung nach dem vorstehenden Anspruch, wobei die digitalen Schaltungen ausgelegt sind, um die digitalen Abtastwerte in den Frequenzbereich umzuwandeln und einen Signalbeginn in Abhängigkeit von einem Vergleich der Leistung für jede Frequenz mit mindestens einem Schwellenwert zu detektieren.

6. Vorrichtung nach einem der Ansprüche 3 bis 5, wobei die digitalen Schaltungen ausgelegt sind, um:
- ein erstes Dezimieren der Serie durch einen ersten konstanten Faktor auszuführen,
- anschließend ein zweites Dezimieren der Serie durch einen Faktor, der von einer Bandbreite abhängt, entsprechend den Merkmalen des mindestens einen entfernten akustischen Senders (21), auszuführen.

7. Unterwasserziel mit einer Vorrichtung nach einem der vorstehenden Ansprüche.

8. System mit mindestens einem Unterwasserziel nach dem vorstehenden Anspruch und mindestens einem Detektor (2).

9. Verfahren, das von einem Unterwasserziel (1) mit einem akustischen Empfänger (11) und einem akustischen Sender (16) durchgeführt wird, wobei das Verfahren einen ersten Betriebszyklus aufweist, aufweisend
- das Detektieren innerhalb eines vom akustischen Empfänger erfassten akustischen Stroms (31) des Beginns eines ersten akustischen Signals, entsprechend den Merkmalen mindestens eines entfernten akustischen Senders (21) mindestens eines Detektors (2);
- das Auslösen des Aufzeichnens des ersten Signals nach dem Detektieren des Beginns des ersten Signals;
- das Detektieren des Endes des ersten Signals innerhalb des akustischen Stroms;
- das Auslösen des Anhaltens des Aufzeichnens nach dem Detektieren des Endes des ersten Signals;
anschließend einen zweiten Betriebszyklus, aufweisend:
- das Detektieren innerhalb des akustischen Stroms des Beginns eines zweiten akustischen Signals derselben Art wie das erste Signal entsprechend den genannten Merkmalen; und nach dem Detektieren des Beginns des zweiten Signals, das Auslösen des Übertragens des ersten Signals, das während des ersten Betriebszyklus aufgezeichnet wurde, über den akustischen Sender (16).

10. Computerprogramm mit Befehlen, die, sobald sie in einen Speicher eines in einem Unterwasserziel eingebauten Prozessors geladen sind, der eine Vorrichtung nach Anspruch 1 aufweist, das Durchführen eines Verfahrens nach dem vorstehenden Anspruch erlauben.

## Claims

1. Device for a submarine target (1)comprising an acoustic receiver (11), an acoustic transmitter (16) and processing means (10) suitable for carrying out a first cycle of operations including
- detecting, within an acoustic stream (31) captured by said acoustic receiver, the onset of a first acoustic signal corresponding to characteristics of at least one remote acoustic transmitter (21) of at least one detector (2);
- following the detection of the onset of said first signal, triggering recording of said first signal;
- detecting, within said acoustic stream, the end of said first signal;
- following the detection of the end of said first signal, triggering stopping of said recording;
followed by a second cycle of operations including:
- detecting, within said acoustic stream, the onset of a second acoustic signal of the same kind as the first signal and corresponding to said characteristics; and following the detection of the onset of said second signal, triggering transmission, by means of said acoustic transmitter (16), of the first signal recorded during the first cycle of operations.

2. Device according to the preceding claim, wherein said second cycle is iterated several times, preferably 5 times.

3. Device according to either of the preceding claims, wherein said processing means are suitable for detecting first and second signals corresponding to characteristics of a plurality of remote acoustic receivers (21) of separate detectors.

4. Device according to any of the preceding claims, wherein said processing means comprise an analog-to-digital converter (12) for converting said acoustic stream into a series of digital samples, digital circuits (13) for processing said series, a digital-to-analog converter (14) for converting said series into an analog signal, and an amplifier (15) for amplifying said analog signal prior to its transmission by means of said acoustic transmitter (16).

5. Device according to the preceding claim, wherein said digital circuits are suitable for transforming said digital samples into the frequency domain and for detecting a signal onset according to a comparison between a power for each frequency and at least one threshold.

6. Device according to any of claims 3 to 5, wherein said digital circuits are suitable for:
- carrying out a first decimation of said series, by a first constant factor,
- then, carrying out a second decimation of said series, by a factor depending on a bandwidth corresponding to said characteristics of said at least one remote acoustic transmitter (21).

7. Submarine target, comprising a device according to any of the preceding claims.

8. System comprising at least one submarine target according to the preceding claim and at least one detector (2).

9. Method, implemented by a submarine target (1) comprising an acoustic receiver (11) and an acoustic transmitter (16), said method comprising a first cycle of operations including
- detecting, within an acoustic stream (31) captured by said acoustic receiver, the onset of a first acoustic signal corresponding to characteristics of at least one remote acoustic transmitter (21) of at least one detector (2);
- following the detection of the onset of said first signal, triggering recording of said first signal;
- detecting, within said acoustic stream, the end of said first signal;
- following the detection of the end of said first signal, triggering stopping of said recording;
followed by a second cycle of operations including:
- detecting, within said acoustic stream, the onset of a second acoustic signal of the same kind as the first signal and corresponding to said characteristics; and following the detection of the onset of said second signal, triggering transmission, by means of said acoustic transmitter (16), of the first signal recorded during the first cycle of operations.

10. Computer program comprising instructions which, when loaded onto a memory of a processor on board a submarine target comprising a device according to claim 1, enable a method according to the preceding claim to be implemented.
